# EUROPEAN PATENT SPECIFICATION

(11) **EP 2 744 262 B1**
(45) Date of publication and mention of the grant of the patent: **14.06.2017**
(21) Application number: 12823573.6
(22) Date of filing: 10.08.2012
(51) Int. Cl.: H04W 72/04, H04L 5/00

(54) **METHOD FOR SETTING A CARRIER AGGREGATION LINK UNDER CONSIDERATION OF SUPPORTED POWER REDUCTION SIGNALING**
VERFAHREN ZUR ERSTELLUNG EINER VERBINDUNG MIT TRÄGER-AGGREGATION UNTER BERÜCKSICHTIGUNG VON UNTERSTÜTZTER SIGNALISIERUNG ZUR LEISTUNGSREDUKTION
PROCÉDÉ POUR L'ÉTABLISSEMENT D'UNE CONNEXION À AGRÉGATION DE PORTEUSES SOUS LA CONSIDÉRATION DE LA SIGNALISATION DE RÉDUCTION DE PUISSANCE SUPPORTÉE

(30) Priority: 12.08.2011 JP 2011177194
(43) Date of publication of application: 18.06.2014
(73) Proprietor: NTT DOCOMO, INC., Chiyoda-ku Tokyo 100-6150 (JP)
(72) Inventor: SAGAE, Yuta, Tokyo 100-6150 (JP); UMESH, Anil, Tokyo 100-6150 (JP); TAKAHASHI, Hideaki, Tokyo 100-6150 (JP); UMEDA, Hiromasa, Tokyo 100-6150 (JP)
(74) Representative: Hoffmann Eitle
(86) International application number: PCT/JP2012/070423
(87) International publication number: WO 2013/024796

(56) References cited:
- EP-A1- 2 265 068
- EP-A1- 2 723 127
- WO-A1-2010/087334
- JP-A- 2011 091 747
- JP-A- 2011 091 747

## Description

### TECHNICAL FIELD

The present invention relates to a mobile communication method and a radio base station.

### BACKGROUND ART

According to document JP 2011 091747 A, an ASN encoding unit of a mobile station apparatus generates transmitting/receiving capability information including the information about element carriers that may be used for communications with the base station.

In an LTE (Long Term Evolution) scheme, protection standards are provided to prevent a band from interfering with another band used in the same area (see Non-patent documents 1 and 2).

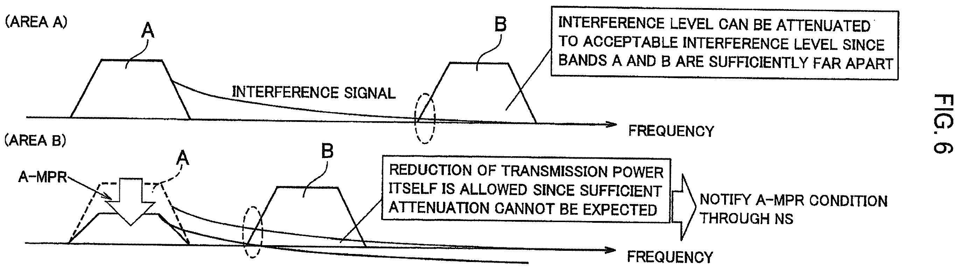

As shown in Fig. 6, in an area A, bands A and B are sufficiently far apart. Thus, even when a mobile station UE performs communication using maximum transmission power, a level of interference of the band A with the band B can be attenuated to an acceptable interference level, i.e., the protection standards described above are met.

In an area B, on the other hand, as shown in Fig. 6, when the mobile station UE performs communication using the maximum transmission power, the level of interference of the band A with the band B cannot be attenuated to the acceptable interference level, i.e., the protection standards described above are not met.

In such a case, the LTE scheme allows the transmission power of the mobile station UE to be limited, i.e., maximum allowable transmission power of the mobile station UE to be reduced.

Such a reduction in the maximum allowable transmission power of the mobile station UE is defined as "A-MPR (Additional-Maximum Power Reduction)".

To be more specific, as shown in Fig. 6, in the LTE scheme, a radio base station eNB is configured to notify a mobile station UE of a method of applying the "A-MPR" by sending the mobile station UE a network signaling value called "NS (Network Signaling)" or "additional Spectrum Emission".

In specifications of the LTE scheme, the mobile station UE is required to support the "NS" corresponding to a band that can be supported by the mobile station UE, while the radio base station eNB is required to notify identification information on one band.

More specifically, in an area where the same frequency configuration as that of a certain band is desired to be used, when a different system exists in an adjacent frequency band and needs to be protected, the "A-MPR" is added. However, since a new "NS" cannot be added to the existing band (the mobile station UE already manufactured cannot satisfy the provisions to support the new "NS"), a new band is defined as having the new "NS" added to the capacity of the existing band.

### PRIOR ART DOCUMENT

### NON-PATENT DOCUMENT

Non-patent document 1: 3GPP TS36.101
Non-patent document 2: 3GPP TS36.104
Non-patent document 3: 3GPP TS36.331

### SUMMARY OF THE INVENTION

In an LTE-Advanced scheme that is a successor scheme to the LTE scheme, a mobile station UE can perform CA (Carrier Aggregation), i.e., can simultaneously communicate with multiple cells using multiple CCs (Component Carriers).

Here, in the LTE-Advanced scheme, a radio base station eNB is configured to set CA for each mobile station UE by using an RRC (Radio Resource Control) function.

In addition, in the LTE-Advanced scheme, a concept such as "CA band combination (carrier aggregation band combination information) " is specified, which corresponds to a band usable in CA. The "CA band combination" includes, for example, a bandwidth, the number of CCs (Component Carriers) to be supported, and the like.

Here, description is given of a case where the "NS" is added to the "CA band combination".

When a need arises to specify a new "A-MPR" for the existing "CA band combination", a new "CA Band Combination" is defined by adding new "A-MPR" and "NS" to the existing "CA Band Combination" as in the concept of bands in the LTE scheme.

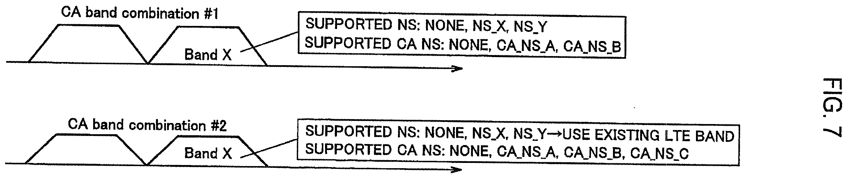

As shown in Fig. 7, for example, in "CA band combination #1", "none", "NS_X", "NS_Y", "CA_NS_A" and "CA_NS_B" are specified as the "NS" corresponding to a band usable in CA.

Also, as shown in Fig. 7, in "CA band combination #2", "none", "NS_X", "NS_Y", "CA_NS_A", "CA_NS_B" and "CA_NS_C" are specified as the "NS" corresponding to a band usable in CA.

Here, in the LTE-Advanced scheme, each mobile station UE is configured to be set with a "CA band combination" that can be supported.

The LTE-Advanced scheme in such a situation has the following problem. Specifically, when the radio base station eNB operates using "CA band combination #1", for example, there is a possibility that the radio base station eNB determines that CA cannot be configured for the mobile station UE that can support only "CA band combination #2", even though the mobile station UE can support all the "NS" specified in "CA band combination #1".

Therefore, the present invention has been made in view of the foregoing problem, and has an objective to provide a mobile communication method and a radio base station, which can appropriately set CA. The object of the invention is achieved by the subject matter of the independent claims.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a table showing an example of contents stored by a storage unit in the radio base station according to the first embodiment of the present invention.
[Fig. 4] Fig. 4 is a sequence diagram showing operations of the mobile communication system according to the first embodiment of the present invention.
[Fig. 5] Fig. 5 is a flowchart showing operations of the radio base station according to the first embodiment of the present invention.
[Fig. 6] Fig. 6 is a diagram for explaining problems of a conventional mobile communication system.
[Fig. 7] Fig. 7 is a diagram for explaining problems of a conventional mobile communication system.

### MODE FOR CARRYING OUT THE INVENTION

### (Mobile Communication System according to First Embodiment of the Present Invention)

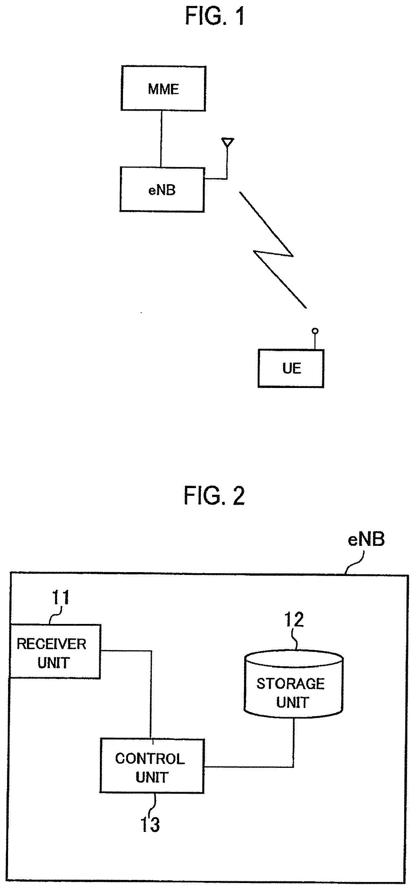

With reference to Figs. 1 to 5, a mobile communication system according to a first embodiment of the present invention will be described. Throughout the drawings illustrating this embodiment, components having the same functions are denoted by the same reference numerals and repetitive description is omitted.

As shown in Fig. 1, the mobile communication system according to this embodiment supports the LTE-Advanced scheme, and includes a mobility management node MME (Mobility Management Entity) and a radio base station eNB.

The radio base station eNB according to this embodiment can support the LTE-Advanced scheme, and includes a receiver unit 11, a storage unit 12 and a control unit 13 as shown in Fig. 2.

The receiver unit 11 is configured to receive various signals from the mobility management node MME and a mobile station UE.

For example, the receiver unit 11 is configured to receive "UE Capability Information" from the mobile station UE, the "UE Capability Information" including a "CA band combination" that is supported by the mobile station UE.

The storage unit 12 is configured to store combinations of "NS" specified by each "CA band combination".

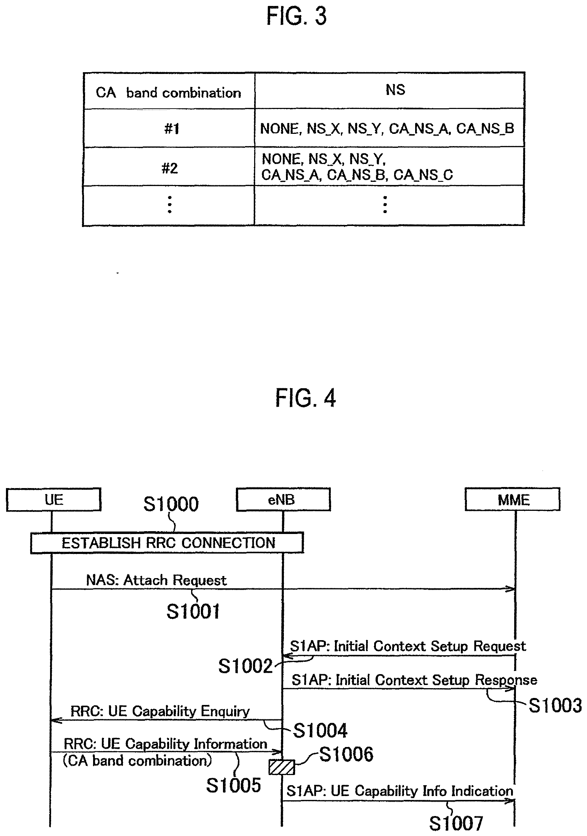

As shown in Fig. 3, for example, the storage unit 12 is configured to store "none", "NS_X", "NS_Y", "CA_NS_A" and "CA_NS_B" as the "NS" specified by "CA band combination #1".

Alternatively, as shown in Fig. 3, the storage unit 12 is configured to store "none", "NS_X", "NS_Y", "CA_NS_A", "CA_NS_B" and "CA_NS_C" as the "NS" specified by "CA band combination #1".

The control unit 13 is configured to perform various control processes. For example, the control unit 13 is configured to set CA for the mobile station UE.

Here, the control unit 13 may be configured to determine whether or not to set CA for the mobile station UE on the basis of whether or not "NS" corresponding to a band used in CA is included in the "NS" specified by the received "CA band combination".

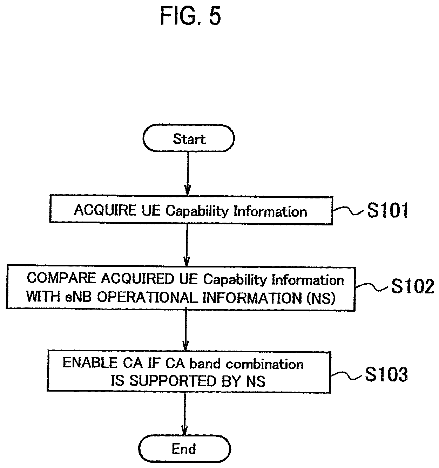

With reference to Figs. 4 and 5, description is given of an example of operations of the mobile communication system according to this embodiment.

First, with reference to Fig. 4, description is given of an attachment operation of the mobile station UE in the mobile communication system according to this embodiment.

As shown in Fig. 4, after establishing an RRC connection with the radio base station eNB in Step S1000, the mobile station UE transmits a "NAS: Attach Request" to the mobility management node MME in Step S1001.

In Step S1002, the mobility management node MME transmits a "S1AP: Initial Context Setup Request" to the radio base station eNB. Then, in Step S1003, the radio base station eNB transmits a "S1AP: Initial Context Setup Response" to the mobility management node MME.

In Step S1004, the radio base station eNB transmits an "RRC: UE Capability Enquiry" to the mobile station UE.

In Step S1005, the mobile station UE transmits an "RRC: UE Capability Information" including a "CA band combination" that is supported by the mobile station UE to the radio base station eNB.

In Step S1006, the radio base station eNB determines whether or not CA can be set for the mobile station UE.

In Step S1007, the radio base station eNB transmits a "S1AP: UE Capability Info Indication" to the mobility management node MME.

Next, with reference to Fig. 5, description is given of the operation of the radio base station eNB in Step S1006 described above.

As shown in Fig. 5, upon receipt of the "RRC: UE Capability Information" in Step S101, the radio base station eNB compares the "NS" specified by the "CA band combination" included in the received "RRC: UE Capability Information" with the "NS" used by the radio base station eNB (i.e., the "NS" used in CA by the radio base station eNB) in Step S102.

In Step S103, the radio base station eNB determines that CA can be configured for the mobile station UE when determining that the "NS" corresponding to the band used in CA is included in the "NS" specified by the "CA band combination" included in the received "RRC: UE Capability Enquiry".

Note that, in such a case, whether or not to actually set CA for the mobile station UE is determined by a function such as a scheduler of the radio base station eNB.

According to the mobile communication system according to the first embodiment of the present invention, CA can be set only for the mobile station UE supporting the "NS" that can be used by the radio base station eNB by comparing the "NS" specified by the "CA band combination" included in the received "RRC: UE Capability Information" with the "NS" used by the radio base station eNB (i.e., the "NS" used in CA by the radio base station eNB).

The features of this embodiment described above may be expressed as follows.

A first feature of this embodiment is summarized as the mobile communication method including the steps of: causing the mobile station UE to notify the radio base station eNB of a piece of "CA band combination" that is supported by the mobile station UE among pieces of "CA band combination (carrier aggregation band combination information each of which specifies combination of network signaling values corresponding to the band usable in carrier aggregation) "; and causing the radio base station eNB to determine whether or not to set carrier aggregation for the mobile station UE on the basis of whether or not "NS (network signaling values) "corresponding to the band used in carrier aggregation are included in "NS" specified by the received piece of "CA band combination".

A second feature of this embodiment is summarized as the radio base station eNB including: the receiver unit 11 configured to acquire "CA band combination" that is supported by the mobile station UE from the mobile station UE; and a control unit 13 configured to determine whether or not to set carrier aggregation for the mobile station UE on the basis of whether or not "NS" corresponding to the band being used in carrier aggregation is included in "NS" specified by the received "CA band combination".

It should be noted that the foregoing operations of the radio base station eNB, the mobile station UE, and the mobility management node MME may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the radio base station eNB, the mobile station UE, or the mobility management node MME. Otherwise, the storage medium and the processor may be provided as discrete components inside the radio base station eNB, the mobile station UE, or the mobility management node MME.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which are determined by the description of the scope of claims. Therefore, the description of the specification is intended for illustrative explanation only and does not impose any limited interpretation on the present invention.

### INDUSTRIAL APPLICABILITY

As described above, the present invention can provide a mobile communication method and a radio base station, which can appropriately set CA.

### EXPLANATION OF THE REFERENCE NUMERALS

- UE: mobile station
- MME: mobility management node
- eNB: radio base station
- 11: receiver unit
- 12: storage unit
- 13: control unit

## Claims

1. A mobile communication method comprising the steps of:
causing a radio base station (eNB) to store combinations of LTE network signaling values (NS_X, NS_Y, CA_NS_A, CA_NS_B, CA_NS_C), said LTE network signaling values used for notifying a mobile station (UE) of a method of applying a reduction in a maximum allowable transmission power of the mobile station (UE) and corresponding to a band usable in carrier aggregation, and to store corresponding pieces of carrier aggregation band combination information (CA band combination #1, CA band combination #2), each of which specifying one of the combinations of LTE network signaling values and referring to a carrier aggregation band combination comprising said band usable in carrier aggregation; by a mobile station (UE), notifying the radio base station (eNB) of a piece of carrier aggregation band combination information (CA band combination #1, CA band combination #2) that is supported by the mobile station (UE) among pieces of carrier aggregation band combination information (CA band combination #1, CA band combination #2) each of which specifies LTE network signaling values (NS_X, NS_Y, CA_NS_A, CA_NS_B, CA_NS_C), said notified piece of carrier aggregation band combination information referring to a carrier aggregation band combination comprising said band usable in carrier aggregation, and causing (S1005) the radio base station (eNB) to determine (S1006) to set carrier aggregation for the mobile station (UE) when all LTE network signaling values (NS_X, NS_Y, CA_NS_A, CA_NS_B, CA_NS_C) corresponding to said band usable in carrier aggregation and stored in the radio base station (eNB) are included in the LTE network signaling values (NS_X, NS_Y, CA_NS_A, CA_NS_B, CA_NS_C) specified by the received piece of carrier aggregation band combination information (CA band combination #1, CA band combination #2).

2. A radio base station (eNB) comprising:
a storage unit (13) configured to store combinations of LTE network signaling values (NS_X, NS_Y, CA_NS_A, CA_NS_B, CA_NS_C), said LTE network signaling values used for notifying a mobile station (UE) of a method of applying a reduction in a maximum allowable transmission power of the mobile station (UE) and corresponding to a band usable in carrier aggregation, and to store corresponding pieces of carrier aggregation band combination information (CA band combination #1, CA band combination #2), each of which specifying one of the combinations of LTE network signaling values and referring to a carrier aggregation band combination comprising said band usable in carrier aggregation; a receiver unit (11) configured to acquire, from a mobile station (UE), a piece of carrier aggregation band combination information (CA band combination #1, CA band combination #2) that is supported by the mobile station (UE) among pieces of carrier aggregation band combination information (CA band combination #1, CA band combination #2) each of which specifies LTE network signaling values (NS_X, NS_Y, CA_NS_A, CA_NS_B, CA_NS_C), said notified piece of carrier aggregation band combination information referring to a carrier aggregation band combination comprising said band usable in carrier aggregation, and a control unit (13) configured to determine to set carrier aggregation for the mobile station (UE) when all LTE network signaling values (NS_X, NS_Y, CA_NS_A, CA_NS_B, CA_NS_C) corresponding to said band usable in carrier aggregation and stored in the radio base station (eNB) are included in the LTE network signaling values (NS_X, NS_Y, CA_NS_A, CA_NS_B, CA_NS_C) specified by the received piece of carrier aggregation band combination information (CA band combination #1, CA band combination #2).

## Patentansprüche

1. Mobilkommunikationsverfahren, umfassend die folgenden Schritte:
Bewirken, dass eine Funkbasisstation (eNB) Kombinationen von LTE-Netzwerk-Zeichengabe-Werten (NS_X, NS_Y, CA_NS_A, CA_NS_B, CA_NS_C) speichert, wobei die LTE-Netzwerk-Zeichengabe-Werte zum Anzeigen, an eine Mobilstation (UE), eines Verfahrens zum Anwenden einer Reduzierung in einer maximal zulässigen Übertragungsleistung der Mobilstation (UE) verwendet werden und einem Band entsprechen, das in einer Carrier-Aggregation verwendbar ist, und entsprechende Carrier-Aggregation-Bandkombination-Informationen (CA-Bandkombination #1, CA-Bandkombination #2) speichert, von denen jede eine der Kombinationen von LTE-Netzwerk-Zeichengabe-Werten spezifiziert und sich auf eine Carrier-Aggregation-Bandkombination bezieht, die das in einer Carrier-Aggregation verwendbare Band umfasst;
durch eine Mobilstation (UE), Anzeigen, an die Funkbasisstation (eNB), ein Stück von Carrier-Aggregation-Bandkombination-Information (CA-Bandkombination #1, CA-Bandkombination #2), das unter Stücken von Carrier-Aggregation-Bandkombination-Informationen (CA-Bandkombination #1, CA-Bandkombination #2), von denen jedes LTE-Netzwerk-Zeichengabe-Werte (NS_X, NS_Y, CA_NS_A, CA_NS_B, CA_NS_C) spezifiziert, von der Mobilstation (UE) unterstützt wird, wobei das angezeigte Stück von Carrier-Aggregation-Bandkombination-Information sich auf eine Carrier-Aggregation-Bandkombination bezieht, die das in einer Carrier-Aggregation verwendbare Band umfasst, und
Bewirken (S1005), dass die Funkbasisstation (eNB) bestimmt (S1006), eine Carrier-Aggregation für die Mobilstation (UE) zu setzen, wenn alle LTE-Netzwerk-Zeichengabe-Werte (NS_X, NS_Y, CA_NS_A, CA_NS_B, CA_NS_C), die dem in einer Carrier-Aggregation verwendbaren Band entsprechen und in der Funkbasisstation (eNB) gespeichert sind, in den LTE-Netzwerk-Zeichengabe-Werten (NS_X, NS_Y, CA_NS_A, CA_NS_B, CA_NS_C), die durch die empfangene Carrier-Aggregation-Bandkombination-Information (CA-Bandkombination #1, CA-Bandkombination #2) spezifiziert sind, enthalten sind.

2. Funkbasisstation (eNB), umfassend:
eine Speichereinheit (13), die ausgebildet ist, um Kombinationen von LTE-Netzwerk-Zeichengabe-Werten (NS_X, NS_Y, CA_NS_A, CA_NS_B, CA_NS_C) zu speichern, wobei die LTE-Netzwerk-Zeichengabe-Werte zum Anzeigen, an eine Mobilstation (UE), eines Verfahrens zum Anwenden einer Reduzierung in einer maximal zulässigen Übertragungsleistung der Mobilstation (UE) verwendet werden und einem Band entsprechen, das in einer Carrier-Aggregation verwendbar ist, und um entsprechende Carrier-Aggregation-Bandkombination-Informationen (CA-Bandkombination #1, CA-Bandkombination #2) zu speichern, von denen jede eine der Kombinationen von LTE-Netzwerk-Zeichengabe-Werten spezifiziert und sich auf eine Carrier-Aggregation-Bandkombination bezieht, die das in einer Carrier-Aggregation verwendbare Band umfasst;
eine Empfängereinheit (11), die ausgebildet ist, um von einer Mobilstation (UE) ein Stück von Carrier-Aggregation-Bandkombination-Information (CA-Bandkombination #1, CA-Bandkombination #2) zu erhalten, das unter Stücken von Carrier-Aggregation-Bandkombination-Informationen (CA-Bandkombination #1, CA-Bandkombination #2), von denen jede LTE-Netzwerk-Zeichengabe-Werte (NS_X, NS_Y, CA_NS_A, CA_NS_B, CA_NS_C) spezifiziert, von der Mobilstation (UE) unterstützt wird, wobei das angezeigte Stück von Carrier-Aggregation-Bandkombination-Information sich auf eine Carrier-Aggregation-Bandkombination bezieht, die das in einer Carrier-Aggregation verwendbare Band umfasst, und
eine Steuereinheit (13), die ausgebildet ist, um zu bestimmen, eine Carrier-Aggregation für die Mobilstation (UE) zu setzen, wenn alle LTE-Netzwerk-Zeichengabe-Werte (NS_X, NS_Y, CA_NS_A, CA_NS_B, CA_NS_C), die dem in einer Carrier-Aggregation verwendbaren Band entsprechen und in der Funkbasisstation (eNB) gespeichert sind, in den LTE-Netzwerk-Zeichengabe-Werten (NS_X, NS_Y, CA_NS_A, CA_NS_B, CA_NS_C), die durch die empfangene Carrier-Aggregation-Bandkombination-Information (CA-Bandkombination #1, CA-Bandkombination #2) spezifiziert sind, enthalten sind.

## Revendications

1. Procédé de communication mobile comprenant les étapes consistant à :
amener une station de base radio (eNB) à stocker des combinaisons de valeurs de signalisation de réseau LTE (NS_X, NS_Y, CA_NS_A, CA_NS_B, CA_NS_C), lesdites valeurs de signalisation de réseau LTE étant utilisées pour notifier à une station mobile (UE) un procédé d'application d'une réduction d'une puissance d'émission admissible maximale de la station mobile (UE) et correspondant à une bande utilisable dans une agrégation de porteuses, et à stocker des morceaux correspondants d'informations de combinaison de bandes d'agrégation de porteuses (combinaison de bandes CA #1, combinaison de bandes CA #2), chacun d'eux spécifiant l'une des combinaisons de valeurs de signalisation de réseau LTE et se référant à une combinaison de bandes d'agrégation de porteuses comprenant ladite bande utilisable dans l'agrégation de porteuses ;
par une station mobile (UE), notifier à la station de base radio (eNB) un morceau d'informations de combinaison de bandes d'agrégation de porteuses (combinaison de bandes CA #1, combinaison de bandes CA #2) qui est supporté par la station mobile (UE) parmi des morceaux d'informations de combinaison de bandes d'agrégation de porteuses (combinaison de bandes CA #1, combinaison de bandes CA #2), chacun d'eux spécifiant des valeurs de signalisation de réseau LTE (NS_X, NS_Y, CA_NS_A, CA_NS_B, CA_NS_C), ledit morceau notifié d'informations de combinaison de bandes d'agrégation de porteuses se référant à une combinaison de bandes d'agrégation de porteuses comprenant ladite bande utilisable dans l'agrégation de porteuses, et
amener (S1005) la station de base radio (eNB) à déterminer (S1006) de fixer l'agrégation de porteuses pour la station mobile (UE) lorsque toutes les valeurs de signalisation de réseau LTE (NS_X, NS_Y, CA_NS_A, CA_NS_B, CA_NS_C) correspondant à ladite bande utilisable dans l'agrégation de porteuses et stockées dans la station de base radio (eNB) sont incluses dans les valeurs de signalisation de réseau LTE (NS_X, NS_Y, CA_NS_A, CA_NS_B, CA_NS_C) spécifiées par le morceau reçu d'informations de combinaison de bandes d'agrégation de porteuses (combinaison de bandes CA #1, combinaison de bandes CA #2).

2. Station de base radio (eNB) comprenant :
une unité de stockage (13) configurée pour stocker des combinaisons de valeurs de signalisation de réseau LTE (NS_X, NS_Y, CA_NS_A, CA_NS_B, CA_NS_C), lesdites valeurs de signalisation de réseau LTE étant utilisées pour notifier à une station mobile (UE) un procédé d'application d'une réduction d'une puissance d'émission admissible maximale de la station mobile (UE) et correspondant à une bande utilisable dans une agrégation de porteuses, et pour stocker des morceaux correspondants d'informations de combinaison de bandes d'agrégation de porteuses (combinaison de bandes CA #1, combinaison de bandes CA #2), chacun d'eux spécifiant l'une des combinaisons de valeurs de signalisation de réseau LTE et se référant à une combinaison de bandes d'agrégation de porteuses comprenant ladite bande utilisable dans l'agrégation de porteuses ;
une unité réceptrice (11) configurée pour acquérir, en provenance d'une station mobile (UE), un morceau d'informations de combinaison de bandes d'agrégation de porteuses (combinaison de bandes CA #1, combinaison de bandes CA #2) qui est supporté par la station mobile (UE) parmi des morceaux d'informations de combinaison de bandes d'agrégation de porteuses (combinaison de bandes CA #1, combinaison de bandes CA #2), chacun d'eux spécifiant des valeurs de signalisation de réseau LTE (NS_X, NS_Y, CA_NS_A, CA_NS_B, CA_NS_C), ledit morceau notifié d'informations de combinaison de bandes d'agrégation de porteuses se référant à une combinaison de bandes d'agrégation de porteuses comprenant ladite bande utilisable dans l'agrégation de porteuses, et
une unité de commande (13) configurée pour déterminer de fixer l'agrégation de porteuses pour la station mobile (UE) lorsque toutes les valeurs de signalisation de réseau LTE (NS_X, NS_Y, CA_NS_A, CA_NS_B, CA_NS_C) correspondant à ladite bande utilisable dans l'agrégation de porteuses et stockées dans la station de base radio (eNB) sont incluses dans les valeurs de signalisation de réseau LTE (NS_X, NS_Y, CA_NS_A, CA_NS_B, CA_NS_C) spécifiées par le morceau reçu d'informations de combinaison de bandes d'agrégation de porteuses (combinaison de bandes CA #1, combinaison de bandes CA #2).
